(19) **Europäisches Patentamt / European Patent Office / Office européen des brevets**

(11) **EP 4 404 150 A1**

(12) # EUROPEAN PATENT APPLICATION

(43) Date of publication:
**24.07.2024  Bulletin 2024/30**

(21) Application number: **23152174.1**

(22) Date of filing: **18.01.2023**

(51) International Patent Classification (IPC):
**G06V 20/40** *(2022.01)*

(52) Cooperative Patent Classification (CPC):
**G06V 20/48**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nagravision Sarl
1033 Cheseaux-sur-Lausanne (CH)**

(72) Inventor: **BUFFARD, Christophe
Phoenix, Arizona (US)**

(74) Representative: **Ipside
7-9 Allée Haussmann
33300 Bordeaux Cedex (FR)**

(54) **MEDIA AUTHENTICATION BASED ON MACHINE LEARNING OUTPUT FEATURES**

(57)    Methods and systems are described herein for authenticating streaming media, based on the use of computer vision or artificial intelligence. An untrained neural network generates a first feature vector from an identified image frame of a first media stream that is encoded with a first encoding scheme. The same or a similar untrained neural network generates a second feature vector from an identified image frame of a second media stream that is encoded with a second encoding scheme. The two encoding schemes do not need to be the same. The two feature vectors are compared, and the second media stream is presumed to be authentic if the differences between the two feature vectors is less than a predetermined threshold.

**EP 4 404 150 A1**

## Description

FIELD

The present disclosure generally relates to processing of media data. For example, aspects of the disclosure are related to authentication of media data (e.g., streaming media data) using an output of a machine learning system (or other artificial intelligence system).

BACKGROUND

Various techniques and systems can be used to determine whether two digital files are identical. One illustrative example of such a technique is digital hashing, which can be used to determine whether two image frames are identical. However, if two image frames are very similar, but not identical, then digital hashing will not provide any measure of how similar the image frames might be. Methods and systems are needed to determine the similarity and the degree of similarity between media data (e.g., two image frames, two videos, etc.), such as when the media data are not identically encoded.

SUMMARY

Techniques and systems are described herein for authenticating media streams based on an output of a machine learning system. The techniques and systems can perform one or more functions based on the determined authentication. According to at least one example, a method is provided for authenticating media content. The method includes: receiving a first feature vector, the first feature vector generated by an artificial intelligence model and corresponding to a first time in a first media stream that is encoded by a first encoding scheme; determining a second time in a second media stream that corresponds to the first time in the first media stream, the second media stream encoded by a second encoding scheme; generating, using the artificial intelligence model, a second feature vector that corresponds to the second time in the second media stream; and determining a difference between the first feature vector and the second feature vector.

In another example, a system for authenticating media is provided. The system includes a storage configured to store instructions and at least one processor configured to execute the instructions and cause the at least one processor to: receive a first feature vector, the first feature vector generated by an artificial intelligence model and corresponding to a first time in a first media stream that is encoded by a first encoding scheme; determine a second time in a second media stream that corresponds to the first time in the first media stream, the second media stream encoded by a second encoding scheme; generate, using the artificial intelligence model, a second feature vector that corresponds to the second time in the second media stream; and determine a difference between the first feature vector and the second feature vector.

In another example, a non-transitory computer-readable medium is provided having stored thereon instructions that, when executed by one or more processors, cause the one or more processors to: receive a first feature vector, the first feature vector generated by an artificial intelligence model and corresponding to a first time in a first media stream that is encoded by a first encoding scheme; determine a second time in a second media stream that corresponds to the first time in the first media stream, the second media stream encoded by a second encoding scheme; generate, using the artificial intelligence model, a second feature vector that corresponds to the second time in the second media stream; and determine a difference between the first feature vector and the second feature vector.

In another example, an apparatus for authenticating media content is provided. The apparatus includes: means for receiving a first feature vector, the first feature vector generated by an artificial intelligence model and corresponding to a first time in a first media stream that is encoded by a first encoding scheme; means for determining a second time in a second media stream that corresponds to the first time in the first media stream, the second media stream encoded by a second encoding scheme; means for generating, using the artificial intelligence model, a second feature vector that corresponds to the second time in the second media stream; and means for determining a difference between the first feature vector and the second feature vector.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

BRIEF DESCRIPTION OF THE DRAWINGS

Illustrative embodiments of the present application are described in detail below with reference to the following figures:

FIG. 1 is a block diagram illustrating an example system for authenticating media content, in accordance with some examples;

FIG. 2 is a block diagram illustrating an example of a process for authenticating media content, in accordance with some examples;

FIG. 3 is a block diagram illustrating an example of a process for authenticating media content, in accordance with some examples;

FIG. 4 is a flow diagram illustrating an example of a process for authenticating media content, in accordance with some examples;

FIG. 5 is a flow diagram illustrating an example of a process for authenticating media content and performing one or more functions based on authenticating media content, in accordance with some examples; and

FIG. 6 is a block diagram illustrating an example of a user device, in accordance with some examples.

## DETAILED DESCRIPTION OF THE INVENTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

The ensuing description provides example embodiments only, and is not intended to limit the scope, applicability, or configuration of the disclosure. Rather, the ensuing description of the example embodiments will provide those skilled in the art with an enabling description for implementing an example embodiment. It should be understood that various changes may be made in the function and arrangement of elements without departing from the spirit and scope of the application as set forth in the appended claims.

Various types of systems can be used to distribute or stream digital media, such as cable systems, fiber optic systems, over-the-top (OTT) systems, satellite systems, among others. For some systems, such as cable networks, the transmission medium is generally owned or controlled by an entity from a point of distribution to a point of reception (e.g., a user premises). In cases where the transmission medium is fiber optic or cable and is controlled by an entity, the media stream is encrypted in a way that makes it difficult to inject an unauthorized stream into the network. Satellite distribution systems for digital media are similar, where an uplink and on-orbit system requires significant investment and technology, and a downlink receiver (e.g., a set-top box) can use proprietary equipment to decrypt the received signal. In some cases, a receiver of a satellite system can be used to authenticate an end user through a proprietary dongle or other physical device. Digital media received over cable or satellite systems is thus generally not subject to the introduction of an unauthorized stream (e.g., counterfeit content). Because these cable and satellite systems are generally controlled from end to end, there is minimal need to verify or authenticate a received stream at the user location. If the stream is received at a receiver device at a user location using the designated equipment, it is almost certainly authentic.

Media streams that are sent over the Internet or other public networks (e.g., OTT systems) may not have the same certainty of authenticity. For example, the content hosted by such Internet-based streaming systems (e.g., OTT systems) is not controlled end-to-end. For instance, in some cases, a user may pirate (e.g., steal) copyrighted content, and may distribute the content without a license. There is a need to be able to authenticate such Internet-based media streams.

Streaming digital media, such as video media, is generally encoded. Different encoding schemes may be used depending on the desired quality, available bandwidth, and transmission medium. Current encoding schemes that can be used for streaming media include Moving Picture Experts Group (MPEG)-1, MPEG-2, MPEG-4, DivX, XviD, H.264 (also known as Advanced Video Coding (AVC)), and H.265 (also known as High Efficiency Video Coding (HEVC)), among others. In addition to the encoding scheme, the video of a stream can be produced at different resolutions, such as 480p, 720p, 1080p, 4K, among others.

Hashing is technique that has been used to confirm that two data files are identical. Hashing can be used for various types of media files, such as image files. However, even the smallest difference between two media files can produce different hash values. Such differences provide no information as to how different the two files are. In one illustrative example, if an original digital stream is encoded into a first stream using a first encoding scheme, and the same original digital stream is encoded into a second stream using a second encoding scheme, a hash of the same image frame from the two different streams will produce completely different hash values. The difference between the hash values provides no indication of a similarity or difference between the underlying image frames.

Methods and systems are described herein that can be used (e.g., by a receiver at a user location, such as a set-top box, by a server, or other device or system) to determine whether a media stream (e.g., distributed using an Internet or other public-based system, such as an OTT system) is authentic, regardless of the encoding and/or encryption used for the media stream. For example, as described in more detail herein, the methods and systems can use the output from a machine learning system, such as a neural network (e.g., an untrained neural network), to confirm or authenticate that two different items of media content are the same. In contrast to the hash-based approach noted above, when the methods and systems described here are applied to the same two streams, encoded with different encoding schemes, two metrics can be determined or generated based on output of the machine learning system. The difference between the two metrics will be small, because the underlying image frames are highly similar although not identical.

In a traditional computer vision application, an untrained neural network (e.g., with randomized or initialized parameters, including weights, biases, and/or other parameters) can be trained using labeled images based on supervised learning techniques. For example, if it is desired to recognize images of cats, the network learns by processing images that contain cats. Over time, as the neural network is trained on the labeled cat images, the neural network will be able to classify objects in unlabeled images as cats. In the methods described here, there is no need to train the neural network. For example, the machine learning system used herein may or may not be trained. Regarding of whether the machine learning system is trained, output features (e.g., feature vectors) from the machine learning system can be used as a signature or key to authenticate that an item of media content is authentic as compared to another item of media content.

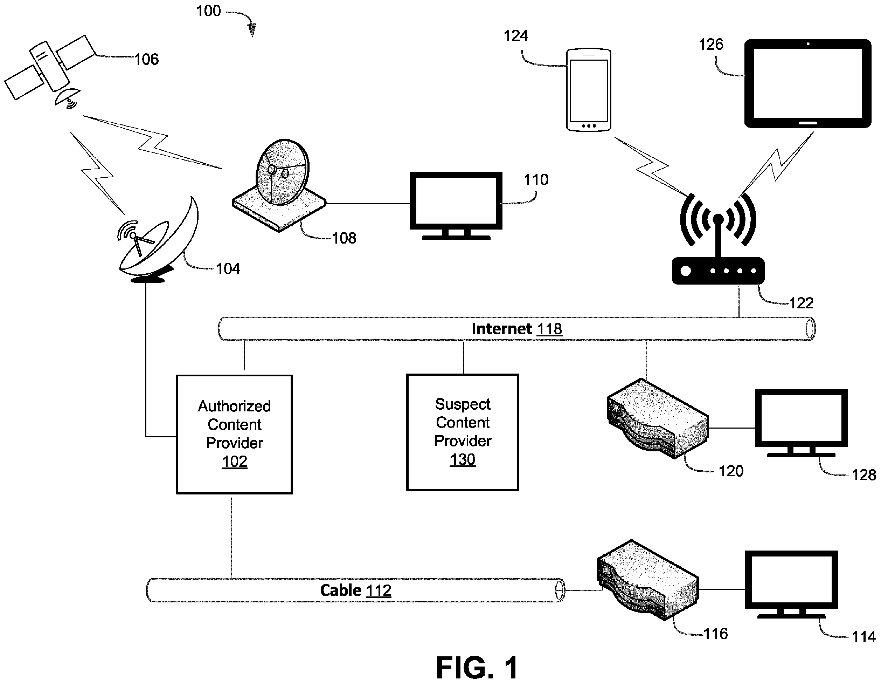

FIG. 1 is a diagram illustrating an example of a system 100. The system 100 includes an authorized content provider 102. In some examples, the authorized content provider 102 can be a media company or an aggregator of media content that distributes media content. In some cases, the authorized content provider 102 may provide content to a satellite delivery system, including ground-based up-link hardware 104, satellite on-orbit hardware 106, and ground-based down-link hardware 108. Examples of satellite delivery systems include DIRECTV and the DISH NETWORK. In other cases, the system 100 may not include a satellite delivery system. The ground-based down-link hardware 108 may be located at a business, or residence, and connected to a media viewing device, such as a television 110. Although not illustrated, a decoding and authorization component (e.g., a receiver such as a set-top box) may be present between the ground-based down-link hardware 108 and/or a television 110.

In some cases, the system 100 can additionally or alternatively include a proprietary terrestrial-based media delivery component 112 that may be fiber-optic based, cable-based (e.g., using coaxial cable), a mix of fiber-optic and cable-based, or the like. The terrestrial delivery system may connect to televisions or other viewing devices 114 at individual residences and businesses using a decoding and authorization component 116.

The system 100 further includes connections to a public network 118, such as the Internet. Individual residences and businesses can connect to the public network using routers (e.g., a router 120 and a router 122). The routers 120 and 122 connect to individual steam viewing devices through wired or wireless connections (e.g., cellular connection, WiFi connection, or other wireless connection). The individual steam viewing devices may include a smart phone 124, a tablet 126, a television 128, the television 110, and/or other devices. The smartphone 124, tablet 126, television 128, or television 110 may run software applications that receive a media stream, decode and/or decrypt the media stream, and display the decoded and/or decrypted media stream. In some cases, streaming devices may connect to the public network 118 through wired or wireless connections, and output the media stream using a physical connection (e.g., an HDMI connection), with a cable (e.g., an HDMI cable) plugged into the streaming device (e.g., a television, a display, etc.). Examples of streaming devices with HDMI outputs include the AMAZON FIRETV, GOOGLE CHROMECAST/GOOGLE TV, APPLE TV, and ROKU.

As shown in FIG. 1, a suspect content provider 130 may be connected to the public network 118. The suspect content provider 130 is not a part of the system 100, although it is illustrated on FIG. 1. Streaming content that is made available on public network 118 by the suspect content provide 130 may or may not be authorized or authentic. The methods and systems described herein can help to confirm whether content provided by the suspect content provider 130 (and/or other suspect content providers) is legitimate content.

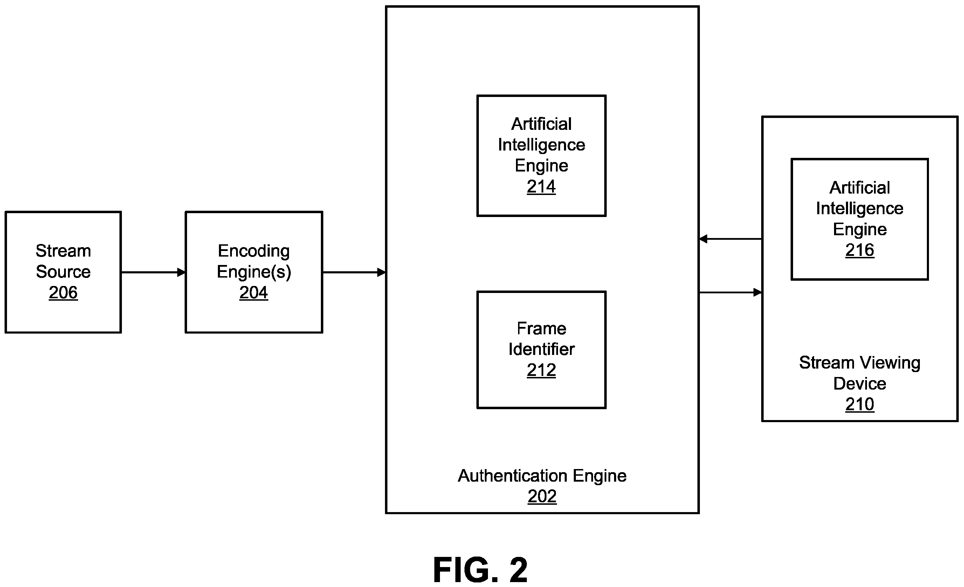

FIG. 2 is a diagram illustrating an example of a system that includes an authentication engine 202. The authentication engine 202 can use a neural network-based media authentication technique to authenticate media content (e.g., images, video frames of video, etc.) according to the methos and systems described herein. For example, the authentication engine 202 can utilize an output of a neural network system to authenticate media content. In some cases, the media content may be streamed media content, such as part of a media stream provided by a stream source 206. The stream source 206 can include a server, a storage device, and/or other source of streamed media content. The media stream may be encoded by at least one encoding engine 204. Any suitable neural network can be used to generate the output used to authenticate the media content. In some cases, the neural network can be a network initially designed to perform a particular task (e.g., object classification), but the neural network may not be used to perform the actual task. Rather, the output features (e.g., a feature vector or vectors) from the neural network can be used for the media content authentication. Illustrative examples of deep neural networks that can be used include a convolutional neural network (CNN), an autoencoder, a deep belief net (DBN), a Recurrent Neural Networks (RNN), or any other suitable neural network. In one illustrative example, a MobileNet based neural network detector can be used by the authentication engine. Other examples of deep network based detectors include a single-shot detector (SSD), a YOLO detector, among other suitable detectors that operate using a complex neural network.

When authentication of a media stream is desired, a stream viewing device 210 can identify the media stream and a particular image frame or timestamp in that media stream. As an example, if the stream viewing device 210 is receiving and displaying video from an event, and the video is being received as a media stream over the Internet or other public network, it may be important to determine whether the media stream in question is authentic. The stream viewing device 210 can identify a particular image frame from that media stream. In some cases, the image frame can be a specific number of seconds or frames after start of the media stream, or it could be related to a scene change in the media stream. The stream viewing device 210 can provide or output information identifying the particular image frame and the identification of the media stream to the authentication engine 202.

The authentication engine 202 has access to the media stream, which may be encoded by the at least one encoding engine 204 as noted above. The encoding engine 204 can apply any type of video coding technique to the media stream, such as MPEG, H.264/AVC, H.265/HEVC, or the like. The authentication engine 202 can receive the particular image frame identified by the information output by the stream viewing device, and the identification of the media stream from the stream viewing device 210. Using the frame identifier 212, the authentication engine 202 can locate the particular image frame in the media stream, and can provide or output the particular frame to an artificial intelligence engine 214. As described herein, the artificial intelligence engine 214 can be or can include a deep neural network, such as a CNN, an autoencoder, a DBN, an RNN, or any other suitable neural network or artificial intelligence model. The artificial intelligence engine 214 can process the identified image frame and generate one or more output features (e.g., one or more feature vector, such as embedding vectors). The authentication engine 202 (e.g., the artificial intelligence engine or other component of the authentication engine 202) can provide or output the one or more output features (e.g., feature vector(s)) to the stream viewing device 210 for use in authenticating a media stream.

The stream viewing device 210 includes an artificial intelligence engine 216 that is the same as, or similar to artificial intelligence engine 214. Like the artificial intelligence engine 214, artificial intelligence engine 216 can be or include a deep neural network, such as a CNN, an autoencoder, a DBN, an RNN, or any other suitable neural network. The artificial intelligence engine 216 can process the identified image frame in the media stream at the stream viewing device 210 that needs to be authenticated to generate one or more output features (e.g., one or more feature vectors). At least one output feature of the one or more output features can be used as a unique signature or key that can be used to authenticate the media stream at the stream viewing device 210. The machine learning model (e.g., the deep neural network) of the artificial intelligence engine 214 and the similar or same machine learning model of the artificial intelligence engine 216 may not be trained, in which case the parameters (e.g., weights, biases, etc.) of the machine learning models may be in their initialized state (e.g., with randomly initialized values). For example, as long as the machine learning models are sufficiently similar or are the same, the artificial intelligence engine 214 and the artificial intelligence engine 216 will generate output features for the same content that are similar enough to be considered the same content. When comparing a frame of a first item of media content (e.g., an authentic item of media content) to a frame of a second item of media content (e.g., a pirated item of media content at the stream viewing device 210) that is different from the first item of media content, the artificial intelligence engine 214 and the artificial intelligence engine 216 will generate output features that are different enough such that the second item of media content will not be authenticated (e.g., as the "signature" provided by the output feature(s) of the frame of the first item of media content does not match the "signature" provided by the output feature(s) of the frame of the second item of media content). In one illustrative example, the media stream of stream viewing device 210 may be encoded differently from the media stream from the stream source 206 that is encoded by encoding engine 204. In some cases, the same image frame may not be available from both stream viewing device 210 and stream source 206. However, if the selected image frames are sufficiently close in time so that they represent substantially the same timestamp (and thus substantially the same content) in the media stream, then values in the output features (e.g., the values included in the feature vector(s)) generated by artificial intelligence engine 214 and artificial intelligence engine 216 will also be substantially similar. The degree of similarity between the output features (e.g., feature vectors) can be used to authenticate the media stream at the stream viewing device 210. When the degree of similarity is above a predetermined threshold, then the stream viewing device 210 can determine that the media stream is authentic. When the degree of similarity is below the predetermined threshold, then the stream viewing device 210 can determine that the media stream is the stream inauthentic or at least suspect of being inauthentic.

The comparison of the output feature (e.g., feature vectors) can be performed at the stream viewing device 210 or can be performed at the authentication engine 202. When performed at the stream viewing device 210, a feature output (e.g., a feature vector) generated by authentication engine 202 can be sent to the stream viewing device 210. When performed at the authentication engine 202, a feature output (e.g., a feature vector) generated by the stream viewing device 210 can be sent to the authentication engine 202. While feature vectors are used herein as an illustrative example of output features. However, other feature representations can be used, such as tensors, two-dimensional or three-dimensional arrays, and/or other representations.

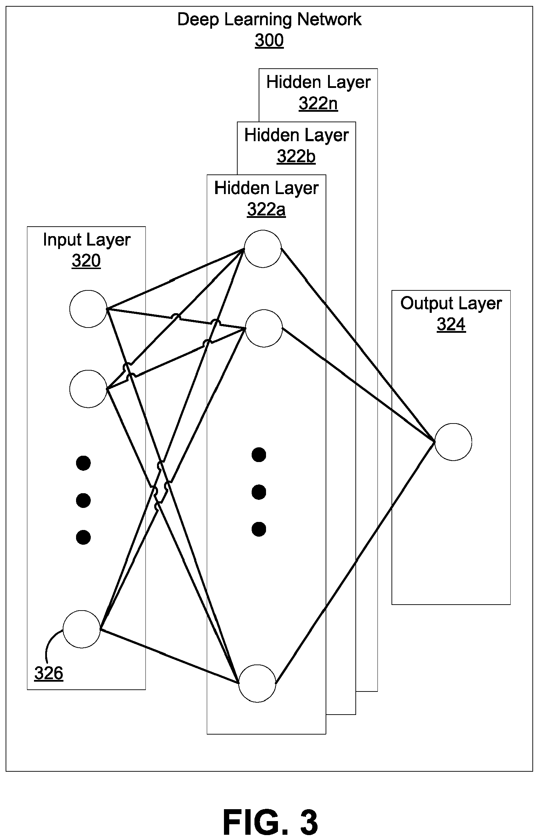

FIG. 3 is an illustrative example of a deep learning neural network 300 that can be used by the artificial intelligence engine 214 and/or the artificial intelligence engine 216. An input layer 320 includes input data. In one illustrative example, the input layer 320 can include data representing the pixels of an input video frame. The deep learning network 300 includes multiple hidden layers 322a, 322b, through 322n. The hidden layers 322a, 322b, through 322n include "n" number of hidden layers, where "n" is an integer greater than or equal to one. The number of hidden layers can be made to include as many layers as needed for the given application. The deep learning network 300 further includes an output layer 324 that provides an output resulting from the processing performed by the hidden layers 322a, 322b, through 322n. In one illustrative example, the output layer 324 can be configured to provide a classification and/or a localization for each object in an input video frame. The classification can include a class identifying the type of object (e.g., a person, a dog, a cat, or other object for which the network 800 is trained to classify). In another illustrative example, the network 300 can be trained to localize an object, in which case the output layer 324 can be configured to provide a localization output such as a bounding box indicating the location of an object. Although a traditional deep learning neural network 300 typically includes an output layer to provide such a classification and/or localization, according to the methods and systems described herein, the output layer is not utilized or required for the neural network-based media authentication methods and systems described herein. In some cases, as noted above, the deep learning network 300 may not be trained. Whether trained or untrained, features (e.g., feature vectors) output by the hidden layers 322a, 322b, through 322n may be used as unique signatures for authenticating media content.

The deep learning network 300 is a multi-layer neural network of interconnected nodes. Each node can represent a piece of information. Information associated with the nodes is shared among the different layers and each layer retains information as information is processed. In some cases, the deep learning network 300 can include a feed-forward network, in which case there are no feedback connections where outputs of the network are fed back into itself. In some cases, the network 300 can include a recurrent neural network, which can have loops that allow information to be carried across nodes while reading in input.

Information can be exchanged between nodes through node-to-node interconnections between the various layers. Nodes of the input layer 320 can activate a set of nodes in the first hidden layer 322a. For example, as shown, each of the input nodes of the input layer 320 is connected to each of the nodes of the first hidden layer 322a. The nodes of the hidden layers 322an can transform the information of each input node by applying activation functions to these information. The information derived from the transformation can then be passed to and can activate the nodes of the next hidden layer 322b, which can perform their own designated functions. Example functions include convolutional, up-sampling, data transformation, and/or any other suitable functions. The output of the hidden layer 322b can then activate nodes of the next hidden layer, and so on. The output of the last hidden layer 322n can activate one or more nodes of the output layer 324, at which an output is provided. In some cases, while nodes (e.g., node 326) in the deep learning network 300 are shown as having multiple output lines, a node has a single output and all lines shown as being output from a node represent the same output value.

In some cases, when the network has been trained, each node or interconnection between nodes can have a weight that is a set of parameters derived from the training of the deep learning network 300. For example, an interconnection between nodes can represent a piece of information learned about the interconnected nodes. The interconnection can have a tunable numeric weight that can be tuned (e.g., based on a training dataset), allowing the deep learning network 300 to be adaptive to inputs and able to learn as more and more data is processed.

The deep learning network 300 can be pretrained to process the features from the data in the input layer 320 using the different hidden layers 322a, 322b, through 322n in order to provide the output through the output layer 324. In an example in which the deep learning network 300 is used to identify objects in images, the network 300 can be trained using training data that includes both images and labels. For instance, training images can be input into the network, with each training image having a label indicating the classes of the one or more objects in each image (basically, indicating to the network what the objects are and what features they have). In one illustrative example, a training image can include an image of a number 2, in which case the label for the image can be [0 0 1 0 0 0 0 0 0 0].

In some cases, the deep neural network 300 can adjust the weights of the nodes using a training process called backpropagation. Backpropagation can include a forward pass, a loss function, a backward pass, and a weight update. The forward pass, loss function, backward pass, and parameter update is performed for one training iteration. The process can be repeated for a certain number of iterations for each set of training images until the network 300 is trained well enough so that the weights of the layers are accurately tuned.

For the example of identifying objects in images, the forward pass can include passing a training image through the network 300. The weights are initially randomized before the deep neural network 300 is trained. The image can include, for example, an array of numbers representing the pixels of the image. Each number in the array can include a value from 0 to 255 describing the pixel intensity at that position in the array. In one example, the array can include a 28 x 28 x 3 array of numbers with 28 rows and 28 columns of pixels and 3 color components (such as red, green, and blue, or luma and two chroma components, or the like).

For a first training iteration for the network 300, the output will likely include values that do not give preference to any particular class due to the weights being randomly selected at initialization. For example, if the output is a vector with probabilities that the object includes different classes, the probability value for each of the different classes may be equal or at least very similar (e.g., for ten possible classes, each class may have a probability value of 0.1). With the initial weights, the network 300 is unable to determine low level features and thus cannot make an accurate determination of what the classification of the object might be. If the network 300 is trained, a loss function can be used to analyze error in the output. Any suitable loss function definition can be used. One example of a loss function includes a mean squared error (MSE). The MSE is defined as

$$E_{total} = \sum \frac{1}{2}(target - output)^2$$

, which calculates the sum of one-half times the actual answer minus the predicted (output) answer squared. The loss can be set to be equal to the value of $E_{total}$.

The description above describes training and loss. However, according to the methods and systems described herein, one or more output vectors of the untrained deep learning network is used for authentication. By using an untrained neural network (e.g., using the initialized parameters, such as weights, of the CNN 400), it is possible to generate output vectors from any two images, and then compare those output vectors by using the output vectors as a unique signature or key. When the images are very similar, such as having only minor differences between some pixels (e.g., based on differences in encoding techniques, differences in resolution, etc.), then the output vectors will also be very similar. Even when the same image frame is encoded using different encoding schemes, the output vectors from those different encoding schemes will also be very similar. For example, according to the methods and systems described herein, even when not trained (e.g., using the initialized parameters, such as weights, of the CNN 400), one or more output features from one or more of the hidden layers 322a, 322b, through 322n can be used as a unique signature or key that can be used to authenticate the media stream at the stream viewing device 210. Because the deep neural network of the artificial intelligence engine 214 is similar to or the same as the deep neural network of the artificial intelligence engine 216, the respective hidden layers of the deep neural network will generate output features that are the same or similar when the media stream at the stream viewing device 210 is the same as a media stream received from the stream source 206 (e.g., even when encoded differently). However, if the media stream at the stream viewing device 210 is not the same (e.g., is a pirated version) as a media stream received from the stream source 206, the artificial intelligence engine 214 and the artificial intelligence engine 216 will generate output features that are different enough such that the media stream at the stream viewing device 210 will not be authenticated.

The deep learning network 300 can include any suitable deep network. One example includes a convolutional neural network (CNN), which includes an input layer and an output layer, with multiple hidden layers between the input and out layers. The hidden layers of a CNN include a series of convolutional, nonlinear, pooling (for downsampling), and fully connected layers. The deep learning network 300 can include any other deep network other than a CNN, such as an autoencoder, a deep belief nets (DBNs), a Recurrent Neural Networks (RNNs), among others.

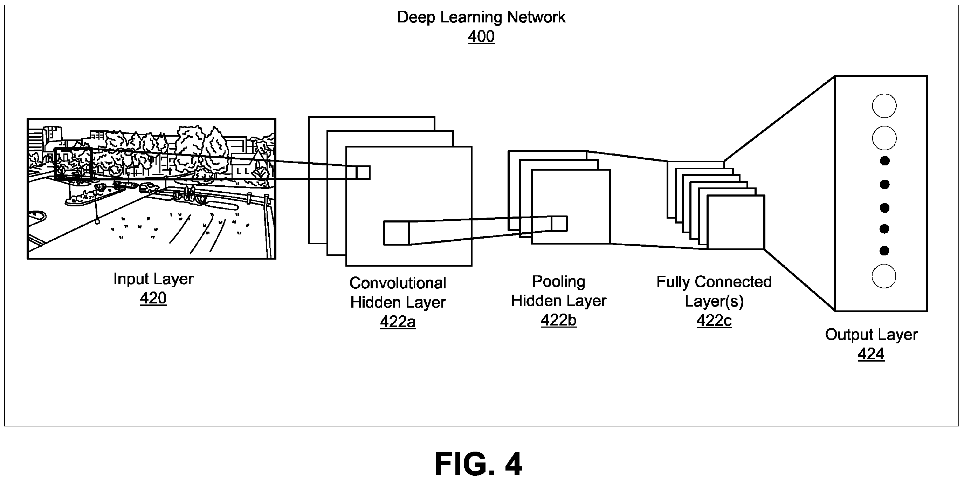

FIG. 4 is an illustrative example of a convolutional neural network 400 (CNN 400). The input layer 420 of the CNN 400 includes data representing an image. For example, the data can include an array of numbers representing the pixels of the image, with each number in the array including a value from 0 to 255 describing the pixel intensity at that position in the array. Using the previous example from above, the array can include a 28 x 28 x 3 array of numbers with 28 rows and 28 columns of pixels and 3 color components (e.g., red, green, and blue, or luma and two chroma components, or the like). The image can be passed through a convolutional hidden layer 422a, an optional non-linear activation layer, a pooling hidden layer 422b, and fully connected hidden layers 422c to get an output at the output layer 424. While only one of each hidden layer is shown in FIG. 4, one of ordinary skill will appreciate that multiple convolutional hidden layers, non-linear layers, pooling hidden layers, and/or fully connected layers can be included in the CNN 400. As previously described, the output of a trained CNN can indicate a single class of an object or can include a probability of classes that best describe the object in the image. A class or probability of classes can be generated for each object in an image. Output features (e.g., feature vectors) output by the convolutional hidden layer 422a and/or the pooling hidden layer 422b can be used as a unique signature or key that can be used to authenticate the media stream at the stream viewing device 210, as described above. As further described above, the features output by the convolutional hidden layer 422a and/or the pooling hidden layer 422b can be used to authenticate the media stream at the stream viewing device 210 even when the CNN 400 is not trained (e.g., using the initialized parameters, such as weights, of the CNN 400).

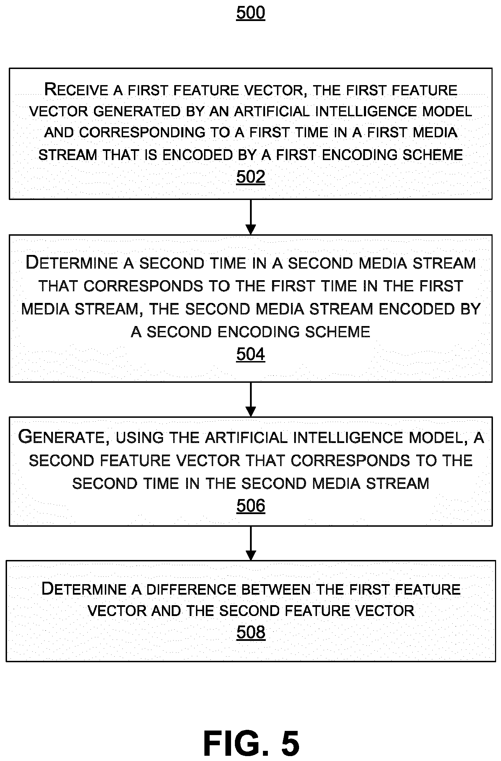

FIG. 5 is a flow diagram illustrating an example of a method 500 of authenticating media according to the techniques described herein. At block 502, the method 500 includes receiving a first feature vector generated by an artificial intelligence model and corresponding to a first time in a first media stream that is encoded by a first encoding scheme. In one illustrative example, the first media stream is a video stream. In some examples, the artificial intelligence model is a convolutional neural network, an autoencoder, a deep belief net, and a recurrent neural network (e.g., the deep learning network 300 of FIG. 3, the CNN 400 of FIG. 4, and/or other machine learning model). In some cases, the method 500 includes receiving a time code with the first feature vector. For example, the time code can correspond to the first time.

At block 504, the method 500 includes determining a second time in a second media stream that corresponds to the first time in the first media stream. The second media stream is encoded by a second encoding scheme. For instance, the second encoding scheme can generate a video resolution that is different than the first encoding scheme.

At block 506, the method 500 includes generating, using the artificial intelligence model, a second feature vector that corresponds to the second time in the second media stream. At block 508, the method 500 includes determining a difference between the first feature vector and the second feature vector. In one example, the method 500 can include identifying the second media stream as authentic based on the difference between the first feature vector and the second feature vector being less than a threshold value. In one example, the method 500 can further include identifying the second media stream as suspect based on the difference between the first feature vector and the second feature vector being greater than a threshold value, as described herein.. In some cases, the method 500 can sending or transmit the difference between the first feature vector and the second feature vector to a remote server.

The components of the devices and/or servers configured to perform the processes described herein can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein.

The processes may be described or illustrated as logical flow diagrams, the operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the processes described herein (e.g., the process 500 of FIG. 5) may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

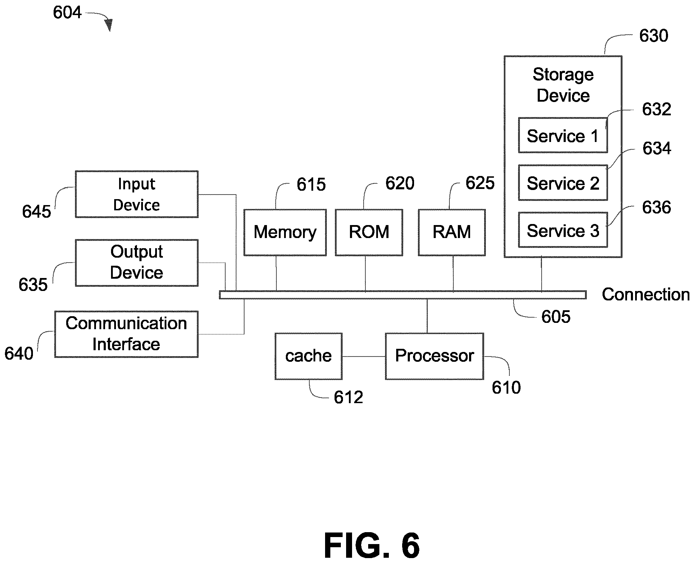

FIG. 6 is a diagram illustrating an example of a system for implementing certain aspects of the techniques described herein. In particular, FIG. 6 illustrates an example of user client device 604, which can be, for example, any computing device making up internal computing system, a remote computing system, a television, a set-top box, a mobile device, another computing device or system, or any component thereof in which the components of the system are in communication with each other using connection 605. Connection 605 can be a physical connection using a bus, or a direct connection into processor 610, such as in a chipset architecture. Connection 605 can also be a virtual connection, networked connection, or logical connection.

In some embodiments, user client device 604 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example user client device 604 includes at least one processing unit (CPU or processor) 610 and connection 605 that couples various system components including system memory 615, such as read-only memory (ROM) 620 and random access memory (RAM) 625 to processor 610. User client device 604 can include a cache 612 of high-speed memory connected directly with, in close proximity to, or integrated as part of processor 610.

Processor 610 can include any general purpose processor and a hardware service or software service, such as services 632, 634, and 636 stored in storage device 630, configured to control processor 610 as well as a special-purpose processor where software instructions are incorporated into the actual processor design. Processor 610 may essentially be a completely self-contained computing system, containing multiple cores or processors, a bus, memory controller, cache, etc. A multi-core processor may be symmetric or asymmetric.

To enable user interaction, user client device 604 includes an input device 645, which can represent any number of input mechanisms, such as a microphone for speech, a touch-sensitive screen for gesture or graphical input, keyboard, mouse, motion input, etc. User client device 604 can also include output device 635, which can be one or more of a number of output mechanisms, including speakers. In some instances, multimodal systems can enable a user to provide multiple types of input/output to communicate with user client device 604. User client device 604 can include communications interface 640, which can generally govern and manage the user input and system output. The communication interface may perform or facilitate receipt and/or transmission wired or wireless communications using wired and/or wireless transceivers, including those making use of an audio jack/plug, a microphone jack/plug, a universal serial bus (USB) port/plug, an Apple® Lightning® port/plug, an Ethernet port/plug, a fiber optic port/plug, a proprietary wired port/plug, a BLUETOOTH® wireless signal transfer, a BLUETOOTH® low energy (BLE) wireless signal transfer, an IBEACON® wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, 3G/4G/5G/LTE cellular data network wireless signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof. The communications interface 640 may also include one or more Global Navigation Satellite System (GNSS) receivers or transceivers that are used to determine a location of the computing system based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 630 can be a non-volatile and/or non-transitory and/or computer-readable memory device and can be a hard disk or other types of computer readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a blu-ray disc (BDD) optical disc, a holographic optical disk, another optical medium, a secure digital (SD) card, a micro secure digital (microSD) card, a Memory Stick® card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (L1/L2/L3/L4/L5/L#), resistive random-access memory (RRAM/ReRAM), phase change memory (PCM), spin transfer torque RAM (STT-RAM), another memory chip or cartridge, and/or a combination thereof.

The storage device 630 can include software services, servers, services, etc., that when the code that defines such software is executed by the processor 610, it causes the system to perform a function. In some embodiments, a hardware service that performs a particular function can include the software component stored in a computer-readable medium in connection with the necessary hardware components, such as processor 610, connection 605, output device 635, etc., to carry out the function. The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

In the foregoing description, aspects of the application are described with reference to specific embodiments thereof, but those skilled in the art will recognize that the application is not limited thereto. Thus, while illustrative embodiments of the application have been described in detail herein, it is to be understood that the inventive concepts may be otherwise variously embodied and employed, and that the appended claims are intended to be construed to include such variations, except as limited by the prior art. Various features and aspects of the above-described subject matter may be used individually or jointly. Further, embodiments can be utilized in any number of environments and applications beyond those described herein without departing from the broader spirit and scope of the specification. The specification and drawings are, accordingly, to be regarded as illustrative rather than restrictive. For the purposes of illustration, methods were described in a particular order. It should be appreciated that in alternate embodiments, the methods may be performed in a different order than that described.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

One of ordinary skill will appreciate that the less than ("<") and greater than (">") symbols or terminology used herein can be replaced with less than or equal to ("≤") and greater than or equal to ("≥") symbols, respectively, without departing from the scope of this description.

The various illustrative logical blocks, modules, circuits, and algorithm steps described in connection with the embodiments disclosed herein may be implemented as electronic hardware, computer software, firmware, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software modules or hardware modules configured for encoding and decoding, or incorporated in a combined video encoder-decoder (CODEC).

Illustrative aspects of the disclosure include:

Aspect 1. A method for authenticating media, comprising: receiving a first feature vector, the first feature vector generated by an artificial intelligence model and corresponding to a first time in a first media stream that is encoded by a first encoding scheme; determining a second time in a second media stream that corresponds to the first time in the first media stream, the second media stream encoded by a second encoding scheme; generating, using the artificial intelligence model, a second feature vector that corresponds to the second time in the second media stream; and determining a difference between the first feature vector and the second feature vector.

Aspect 2. The method of Aspect 1, further comprising identifying the second media stream as authentic based on the difference between the first feature vector and the second feature vector being less than a threshold value.

Aspect 3. The method of any one of Aspects 1 or 2, further comprising identifying the second media stream as suspect based on the difference between the first feature vector and the second feature vector being greater than a threshold value.

Aspect 4. The method of any one of Aspects 1 to 3, wherein the artificial intelligence model is one of a convolutional neural network, an autoencoder, a deep belief net, or a recurrent neural network.

Aspect 5. The method of any one of Aspects 1 to 4, further comprising receiving a time code with the first feature vector, the time code corresponding to the first time.

Aspect 6. The method of any one of Aspects 1 to 5, wherein the first media stream is a video stream.

Aspect 7. The method of any one of Aspects 1 to 6, wherein the second encoding scheme generates a video resolution that is different than the first encoding scheme.

Aspect 8. The method of any one of Aspects 1 to 7, further comprising sending the difference between the first feature vector and the second feature vector to a remote server.

Aspect 9. A system for authenticating media, the system comprising: a storage configured to store instructions; and at least one processor configured to execute the instructions and cause the at least one processor to: receive a first feature vector, the first feature vector generated by an artificial intelligence model and corresponding to a first time in a first media stream that is encoded by a first encoding scheme; determine a second time in a second media stream that corresponds to the first time in the first media stream, the second media stream encoded by a second encoding scheme; generate, using the artificial intelligence model, a second feature vector that corresponds to the second time in the second media stream; and determine a difference between the first feature vector and the second feature vector.

Aspect 10. The system according to Aspect 9, wherein the at least one processor is further configured to execute the instructions and cause the at least one processor to identify the second media stream as authentic based on the difference between the first feature vector and the second feature vector being less than a threshold value.

Aspect 11. The system according to any one of Aspects 9 or 10, wherein the at least one processor is further configured to execute the instructions and cause the at least one processor to identify the second media stream as suspect based on the difference between the first feature vector and the second feature vector being greater than a threshold value.

Aspect 12. The system according to any one of Aspects 9 to 11, wherein the artificial intelligence model is one of a convolutional neural network, an autoencoder, a deep belief net, and a recurrent neural network.

Aspect 13. The system according to any one of Aspects 9 to 12, wherein the at least one processor is further configured to execute the instructions and cause the at least one processor to receive a time code with the first feature vector, the time code corresponding to the first time.

Aspect 14. The system according to any one of Aspects 9 to 13, wherein the first media stream is a video stream.

Aspect 15. The system according to any one of Aspects 9 to 14, wherein the second encoding scheme generates a video resolution that is different than the first encoding scheme.

Aspect 16. The system according to any one of Aspects 9 to 15, wherein the at least one processor is further configured to execute the instructions and cause the at least one processor to send the difference between the first feature vector and the second feature vector to a remote server.

Aspect 17. A non-transitory computer-readable medium having stored thereon instructions that, when executed by one or more processors, cause the one or more processors to: receive a first feature vector, the first feature vector generated by an artificial intelligence model and corresponding to a first time in a first media stream that is encoded by a first encoding scheme; determine a second time in a second media stream that corresponds to the first time in the first media stream, the second media stream encoded by a second encoding scheme; generate, using the artificial intelligence model, a second feature vector that corresponds to the second time in the second media stream; and determine a difference between the first feature vector and the second feature vector.

Aspect 18. The non-transitory computer-readable medium of Aspect 17, wherein the instructions that, when executed by one or more processors, further cause the one or more processors to identify the second media stream as suspect based on the difference between the first feature vector and the second feature vector being greater than a threshold value.

Aspect 19. The non-transitory computer-readable medium of any one of Aspects 17 or 18, wherein the artificial intelligence model is one of a convolutional neural network, an autoencoder, a deep belief net, and a recurrent neural network.

Aspect 20. The non-transitory computer-readable medium of any one of Aspects 17 to 19, wherein the instructions that, when executed by one or more processors, further cause the one or more processors to receive a time code with the first feature vector, the time code corresponding to the first time.

Aspect 21. The non-transitory computer-readable medium of any one of Aspects 17 to 20, wherein the first media stream is a video stream.

Aspect 22. The non-transitory computer-readable medium of any one of Aspects 17 to 21, wherein the second encoding scheme generates a video resolution that is different than the first encoding scheme.

Aspect 23. The non-transitory computer-readable medium of any one of Aspects 17 to 22, wherein the instructions that, when executed by one or more processors, further cause the one or more processors to send the difference between the first feature vector and the second feature vector to a remote server.

## Claims

1. A method for authenticating media, comprising:

   receiving a first feature vector, the first feature vector generated by an artificial intelligence model and corresponding to a first time in a first media stream that is encoded by a first encoding scheme;
   determining a second time in a second media stream that corresponds to the first time in the first media stream, the second media stream encoded by a second encoding scheme;
   generating, using the artificial intelligence model, a second feature vector that corresponds to the second time in the second media stream; and
   determining a difference between the first feature vector and the second feature vector.

2. The method of claim 1, further comprising identifying the second media stream as authentic based on the difference between the first feature vector and the second feature vector being less than a threshold value.

3. The method of claim 1, further comprising identifying the second media stream as suspect based on the difference between the first feature vector and the second feature vector being greater than a threshold value.

4. The method of claim 1, wherein the artificial intelligence model is one of a convolutional neural network, an autoencoder, a deep belief net, or a recurrent neural network.

5. The method of claim 1, further comprising receiving a time code with the first feature vector, the time code corresponding to the first time.

6. The method of claim 1, wherein the first media stream is a video stream.

7. The method of claim 1, wherein the second encoding scheme generates a video resolution that is different than the first encoding scheme.

8. The method of claim 1, further comprising sending the difference between the first feature vector and the second feature vector to a remote server.

9. A system for authenticating media, the system comprising:

   a storage configured to store instructions; and
   at least one processor configured to execute the instructions and cause the at least one processor to:

      receive a first feature vector, the first feature vector generated by an artificial intelligence model and corresponding to a first time in a first media stream that is encoded by a first encoding scheme;
      determine a second time in a second media stream that corresponds to the first time in the first media stream, the second media stream encoded by a second encoding scheme;

generate, using the artificial intelligence model, a second feature vector that corresponds to the second time in the second media stream; and
determine a difference between the first feature vector and the second feature vector.

10. The system according to claim 9, wherein the at least one processor is further configured to execute the instructions and cause the at least one processor to identify the second media stream as authentic based on the difference between the first feature vector and the second feature vector being less than a threshold value.

11. The system according to claim 9, wherein the at least one processor is further configured to execute the instructions and cause the at least one processor to identify the second media stream as suspect based on the difference between the first feature vector and the second feature vector being greater than a threshold value.

12. The system according to claim 9, wherein the artificial intelligence model is one of a convolutional neural network, an autoencoder, a deep belief net, and a recurrent neural network.

13. The system according to claim 9, wherein the second encoding scheme generates a video resolution that is different than the first encoding scheme.

14. The system according to claim 9, wherein the at least one processor is further configured to execute the instructions and cause the at least one processor to send the difference between the first feature vector and the second feature vector to a remote server.

15. A non-transitory computer-readable medium having stored thereon instructions that, when executed by one or more processors, cause the one or more processors to:

receive a first feature vector, the first feature vector generated by an artificial intelligence model and corresponding to a first time in a first media stream that is encoded by a first encoding scheme;
determine a second time in a second media stream that corresponds to the first time in the first media stream, the second media stream encoded by a second encoding scheme;
generate, using the artificial intelligence model, a second feature vector that corresponds to the second time in the second media stream; and
determine a difference between the first feature vector and the second feature vector.

**FIG. 1**

EP 4 404 150 A1

**FIG. 2**

**FIG. 3**

Deep Learning Network
400

Input Layer
420

Convolutional
Hidden Layer
422a

Pooling
Hidden Layer
422b

Fully Connected
Layer(s)
422c

Output Layer
424

FIG. 4

500

RECEIVE A FIRST FEATURE VECTOR, THE FIRST FEATURE
VECTOR GENERATED BY AN ARTIFICIAL INTELLIGENCE MODEL
AND CORRESPONDING TO A FIRST TIME IN A FIRST MEDIA
STREAM THAT IS ENCODED BY A FIRST ENCODING SCHEME
502

DETERMINE A SECOND TIME IN A SECOND MEDIA STREAM
THAT CORRESPONDS TO THE FIRST TIME IN THE FIRST
MEDIA STREAM, THE SECOND MEDIA STREAM ENCODED BY
A SECOND ENCODING SCHEME
504

GENERATE, USING THE ARTIFICIAL INTELLIGENCE MODEL, A
SECOND FEATURE VECTOR THAT CORRESPONDS TO THE
SECOND TIME IN THE SECOND MEDIA STREAM
506

DETERMINE A DIFFERENCE BETWEEN THE FIRST FEATURE
VECTOR AND THE SECOND FEATURE VECTOR
508

# FIG. 5

**FIG. 6**

EP 4 404 150 A1

Europäisches
Patentamt

European
Patent Office

Office européen
des brevets

# EUROPEAN SEARCH REPORT

**Application Number**

EP 23 15 2174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 989 158 A1 (HUAWEI CLOUD COMPUTING TECH CO LTD [CN]) 27 April 2022 (2022-04-27) * paragraph [0001]; figure 8 * * paragraph [0003] * * paragraph [0006] * * paragraph [0008] * * paragraph [0011] * * paragraph [0015] * * paragraph [0041] – paragraph [0045] * * paragraph [0076] * | 1-15 | INV. G06V20/40 |
| X | WO 2020/022956 A1 (AIOZ PTE LTD [SG]) 30 January 2020 (2020-01-30) * the whole document * | 1-15 | |
| A | MA QIANG ET AL: "Perceptual hashing method for video content authentication with maximized robustness", EURASIP JOURNAL ON IMAGE AND VIDEO PROCESSING, [Online] vol. 2021, no. 1, 21 November 2021 (2021-11-21), XP093046331, DOI: 10.1186/s13640-021-00577-z Retrieved from the Internet: URL:https://link.springer.com/article/10.1186/s13640-021-00577-z/fulltext.html> [retrieved on 2023-05-11] * the whole document * | 1-15 | **TECHNICAL FIELDS SEARCHED (IPC)** G06V |

The present search report has been drawn up for all claims

| Place of search | Date of completion of the search | Examiner |
|---|---|---|
| The Hague | 12 May 2023 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 15 2174

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2023

| Patent document cited in search report | | Publication date | Patent family member(s) | | Publication date |
|---|---|---|---|---|---|
| EP 3989158 | A1 | 27-04-2022 | CN 114041165 A | | 11-02-2022 |
| | | | EP 3989158 A1 | | 27-04-2022 |
| | | | US 2022172476 A1 | | 02-06-2022 |
| | | | WO 2021007846 A1 | | 21-01-2021 |
| WO 2020022956 | A1 | 30-01-2020 | NONE | | |

For more details about this annex : see Official Journal of the European Patent Office, No. 12/82